# EUROPEAN PATENT SPECIFICATION

(11) **EP 1 179 914 B1**
(45) Date of publication and mention of the grant of the patent: **20.10.2004**
(21) Application number: 01119052.7
(22) Date of filing: 07.08.2001
(51) Int. Cl.: H04L 12/24

(54) **System, method and record medium for packet transmission capable of reducing delay due to resource assignment**
System, Verfahren und Aufzeichungsmedium zur Paketübertragung bei verminderter Verzögerung durch Ressourcenzuordnung
Systéme, méthode et support d'enregistrement pour la transmission de paquet capable de réduire le retard en utilisant l'allocation des ressources

(30) Priority: 11.08.2000 JP 2000244891
(43) Date of publication of application: 13.02.2002
(73) Proprietor: NEC CORPORATION, Tokyo (JP)
(72) Inventor: Yamamoto, Masatoshi, Minato-ku, Tokyo (JP)
(74) Representative: Glawe, Delfs, Moll & Partner

(56) References cited:
- EP-A- 0 881 808
- US-A- 5 818 828
- US-A- 6 049 549

## Description

### BACKGROUND OF THE INVENTION

The present invention relates to a system and a method for packet transmission for communicating data among a plurality of remotely placed terminal units, and in particular, to a system and a method for packet transmission in which delay time caused by resource assignment can be reduced and thereby data transmission throughput can be increased.

### Description of the Related Art

Packet transmission has been carried out by means of, for example, TDMA (Time Division Multiple Access), in which a frequency band is time-divided so as to be used by a plurality of users simultaneously.

However, TDMA does not have means for changing resources depending on the amount of data to be transmitted. Therefore, even when burst data have to be transmitted, only a fixed frequency band is allowed to be used and thus it has been impossible to improve the maximum data transmission rate.

Meanwhile, CDMA (Code Division Multiple Access) is attracting considerable attention in recent years as a means for resolving the above problems. In the case of CDMA, a lot of channels are assigned to a frequency band and resources can be changed dynamically, thereby the maximum data transmission rate can be increased dramatically in comparison with TDMA.

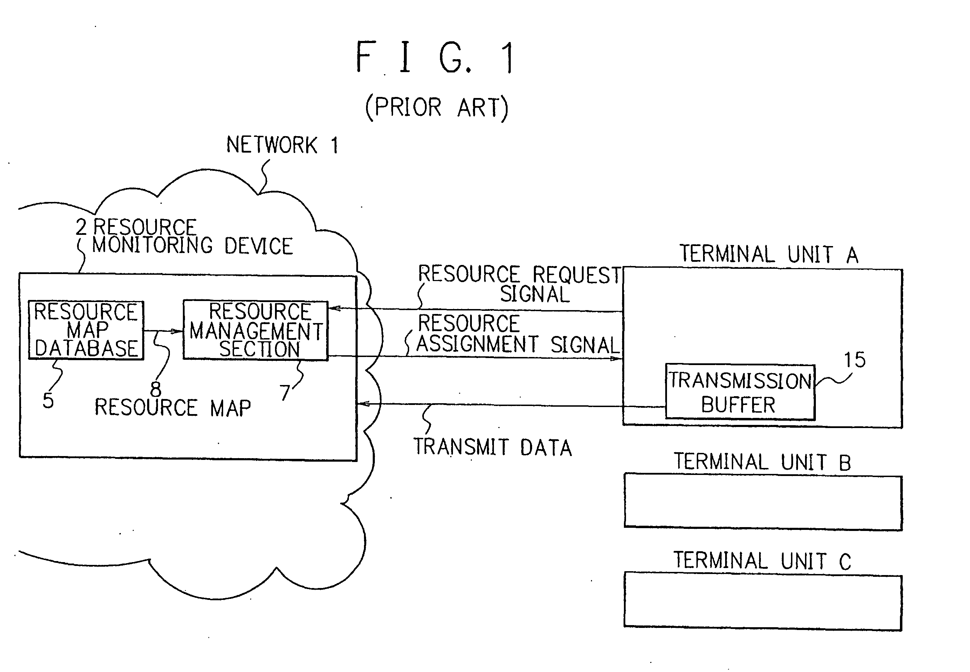

Such technologies for changing resources depending on the amount of transmitted data have been studied by 3GPP (a standards setting body for W-CDMA), for example. Fig. 1 is a block diagram showing an example of a packet transmission system studied and discussed by 3GPP. In the packet transmission system of Fig.1, terminal units A, B and C are capable of making access to a resource monitoring device 2 of a network 1. The resource monitoring device 2 is provided to, for example, a node of the network 1.

Each terminal unit shown in Fig.1 (terminal unit A, for example) is provided with a transmission buffer 15 for storing data to be transmitted to the network 1 (to the resource monitoring device 2). The resource monitoring device 2 includes a resource map database 5 and a resource management section 7. The resource map database 5 stores a resource map 8 in which resources that should be used by the terminal units A, B and C are mapped. The resource management section 7 receives a resource request from a terminal unit that is going to transmit data, and determines a resource that should be used by the terminal unit.

In the following, the operation of the conventional packet transmission system will be explained referring to Fig.1. Data to be transmitted by the terminal unit A is successively stored in the transmission buffer 15 of the terminal unit A. The terminal unit A sends a resource request signal to the resource monitoring device 2 depending on the amount of the data stored in the transmission buffer 15. In the resource monitoring device 2 which received the resource request signal, the resource management section 7 determines a resource to be used by the terminal unit A in consideration of total resources and sends a resource assignment signal (designating a resource that is assigned to the terminal unit A) to the terminal unit A. The terminal unit A which received the resource assignment signal transmits data by use of the resource that is designated by the resource assignment signal.

In the conventional packet transmission system of Fig.1, when a terminal unit (terminal unit A, for example) needs to enlarge its resource width for data transmission, the terminal unit A has to communicate some messages with the resource monitoring device 2. However, a relatively long delay time (on the order of 100 ms) exists between the terminal unit A and the resource monitoring device 2, and thus it is very difficult to increase data transmission throughput (especially in packet transmission systems employing error correction by means of retransmission control) because of the accumulation of the delay time.

US-A-6 049 549 discloses a communication system in which network resources are allocated to communication stations. The stations are polled according to their allocated communication rates, and stations that do not use their allocated rates are polled less than those that use their allocated ones.

US-A-5 818 828 discloses a communication system in which a node is permitted random access to a medium bandwidth under light loading conditions, wherein under higher loading conditions a form of polling is introduced based on traffic pattern.

### SUMMARY OF THE INVENTION

It is therefore the primary object of the present invention to provide a packet transmission system, a packet transmission method and a record medium for packet transmission, by which the delay time concerning the resource assignment can be reduced and thereby the data transmission throughput can be increased.

In accordance with a first aspect of the present invention, there is provided a packet transmission system in which each terminal unit (A, B, C) transmits data to a resource monitoring device (2) of a network (1) for sending the data to another terminal unit via the network (1). In the packet transmission system, the resource monitoring device (2) includes a resource map database (5) and a resource management means (7). The resource map database (5) stores a resource map (8) in which central points of resources that can be used by the terminal units (A, B, C) are described. The resource management means (7) obtains the resource map (8) from the resource map database (5) and transmits the resource map (8) to the terminal units (A, B, C). Each terminal unit (A, B, C) includes a resource detection means (3) and a resource acquisition means (4). The resource detection means (3) detects resource usage statuses (10B) of terminal units that are using resources adjacent to a resource used by the terminal unit (A, B, C) to which the resource detection means (3) belongs, by use of the resource map (8) supplied from the resource monitoring device (2). The resource acquisition means (4) finds idle resources between the resource used by the terminal unit (A, B, C) and the adjacent resources based on the resource usage statuses (10B) detected by the resource detection means (3), and acquires all or part of the idle resources so as to be incorporated in the usable resource (12) of the terminal unit (A, B, C).

In accordance with a second aspect of the present invention, in the first aspect, the resource monitoring device (2) further includes a resource monitoring means (6) for monitoring resource usage statuses (10A) of the terminal units (A, B, C) by monitoring packet traffic from the terminal units (A, B, C). The resource management means (7) includes a resource map update means (7). The resource map update means (7) receives the resource usage statuses (10A) of the terminal units (A, B, C) from the resource monitoring means (6), finds a terminal unit whose resource is insufficient by use of the resource usage statuses (10A), and updates the resource map (8) by setting a reservation resource reference point (13) in an appropriate idle zone of the resource map (8) so as to be used as the central point of a usable resource (12) which is newly assigned to the terminal unit whose resource is insufficient. The resource acquisition means (4) of terminal units that are using resources adjacent to the reservation resource reference point (13) in the updated resource map (8) reduce their resources so that an idle resource zone (14) will be prepared around the reservation resource reference point (13). The resource acquisition means (4) of the terminal unit whose resource is insufficient sets a new resource for the terminal unit in the idle resource zone (14).

In accordance with a third aspect of the present invention, in the first aspect, the data transmission from the terminal units (A, B, C) to the resource monitoring device (2) is executed by means of CDMA (Code Division Multiple Access).

In accordance with a fourth aspect of the present invention, in the first aspect, the resource acquisition means (4) acquires approximately 50% of the idle resources so as to be incorporated in the usable resource (12) of the terminal unit (A, B, C).

In accordance with a fifth aspect of the present invention, there is provided a packet transmission method for a packet transmission system in which each terminal unit (A, B, C) transmits data to a resource monitoring device (2) of a network (1) for sending the data to another terminal unit via the network (1). The packet transmission method comprises a resource map reception step, an adjacent resource usage status detection step and a resource acquisition step. In the resource map reception step, each terminal unit (A, B, C) receives a resource map (8) from the resource monitoring device (2). In the resource map (8), central points of resources that can be used by the terminal units (A, B, C) are described. In the adjacent resource usage status detection step, the terminal unit (A, B, C) detects resource usage statuses (10B) of terminal units that are using resources adjacent to a resource used by the terminal unit (A, B, C), by use of the resource map (8) supplied from the resource monitoring device (2). In the resource acquisition step, the terminal unit (A, B, C) finds idle resources between the resource used by the terminal unit (A, B, C) and the adjacent resources based on the resource usage statuses (10B) detected in the adjacent resource usage status detection step, and acquires all or part of the idle resources so as to be incorporated in the usable resource (12) of the terminal unit (A, B, C).

In accordance with a sixth aspect of the present invention, in the fifth aspect, the packet transmission method further comprises a resource usage status monitoring step, a resource map update step, a resource reduction step and a resource setting step. In the resource usage status monitoring step, the resource monitoring device (2) monitors resource usage statuses (10A) of the terminal units (A, B, C) by monitoring packet traffic from the terminal units (A, B, C). In the resource map update step, the resource monitoring device (2) finds a terminal unit whose resource is insufficient by use of the resource usage statuses (10A) and updates the resource map (8) by setting a reservation resource reference point (13) in an appropriate idle zone of the resource map (8) so as to be used as the central point of a usable resource (12) which is newly assigned to the terminal unit whose resource is insufficient. In the resource reduction step, terminal units that are using resources adjacent to the reservation resource reference point (13) in the updated resource map (8) reduce their resources so that an idle resource zone (14) will be prepared around the reservation resource reference point (13). In the resource setting step, the terminal unit whose resource is insufficient sets its new resource in the idle resource zone (14) prepared in the resource reduction step.

In accordance with a seventh aspect of the present invention, in the fifth aspect, the data transmission from the terminal units (A, B, C) to the resource monitoring device (2) is executed by means of CDMA (Code Division Multiple Access).

In accordance with an eighth aspect of the present invention, in the resource acquisition step of the fifth aspect, the terminal unit (A, B, C) acquires approximately 50% of the idle resources so as to be incorporated in the usable resource (12) of the terminal unit (A, B, C).

In accordance with ninth through twelfth aspects of the present invention, there are provided machine-readable record mediums (floppy disks, CD-ROMs, DVD-ROMs, HDDs, optical disks, etc.) storing programs for instructing one or more computers to execute the packet transmission methods of the fifth through eighth aspects of the present invention.

### BRIEF DESCRIPTION OF THE DRAWINGS

The objects and features of the present invention will become more apparent from the consideration of the following detailed description taken in conjunction with the accompanying drawings, in which:
Fig.1 is a block diagram showing an example of a packet transmission system studied and discussed by 3GPP;
Fig.2 is a block diagram showing a packet transmission system in accordance with an embodiment of the present invention;
Fig.3 is a schematic diagram showing the operation of a resource acquisition section of each terminal unit shown in Fig.2 for judging and determining a resource that can be used by the terminal unit; and
Fig.4 is a schematic diagram showing the operation of a resource management section of a resource monitoring device shown in Fig.2 for assigning appropriate resources to the terminal units for the effective use of the resources.

### DESCRIPTION OF THE PREFERRED EMBODIMENTS

Referring now to the drawings, a description will be given in detail of preferred embodiments in accordance with the present invention.

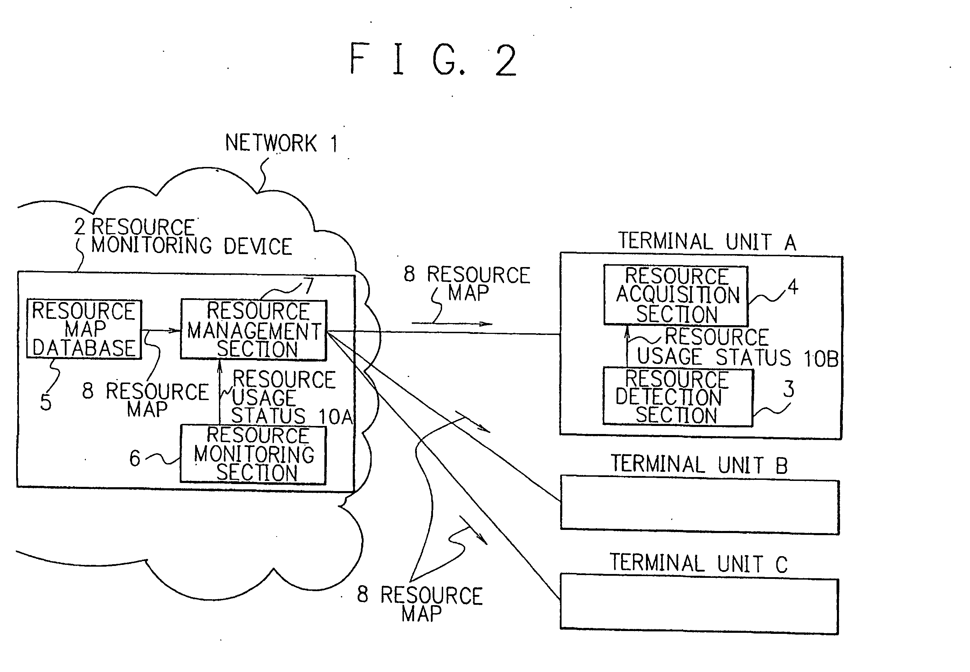

Fig.2 is a block diagram showing a packet transmission system in accordance with an embodiment of the present invention. The packet transmission system of Fig.2 includes a network 1 and terminal units A, B and C. The network 1 includes one or more resource monitoring devices 2 which are provided to, for example, nodes (radio base stations etc.) of the network 1.

Each terminal unit (personal computer, cellular phone, etc.) transmits data (packets) to a resource monitoring device 2 of the network 1 for sending the data to other terminal units via the network 1. The data communication between each terminal unit and the resource monitoring device 2 is executed by means of, for example, CDMA (Code Division Multiple Access) such as TDD (Time Division Duplex) CDMA. Each terminal unit includes a resource detection section 3 and a resource acquisition section 4.

The resource detection section 3 of a terminal unit detects and monitors resource usage statuses of other terminal units that are using "adjacent resources" (that is, resources that are adjacent to the resource being used by the terminal unit), and informs the resource acquisition section 4 about the resource usage statuses (resource usage status 10B).

The resource acquisition section 4 of a terminal unit judges and determines a resource that can be used by the terminal unit based on the resource usage status 10B supplied from the resource detection section 3 and a resource map 8 which is supplied from the resource monitoring device 2. The terminal unit transmits data to the resource monitoring device 2 using the resource acquired (judged and determined) by the resource acquisition section 4.

The resource monitoring device 2 includes a resource map database 5, a resource monitoring section 6 and a resource management section 7. The resource map database 5 stores a resource map 8 in which resources that should be used by the terminal units A, B and C are mapped. The resource map 8 stored in the resource map database 5 is supplied to the resource management section 7. The resource monitoring section 6 monitors transmit data which are transmitted by the terminal units A, B and C and thereby detects resources which are being used by the terminal units A, B and C. The resource monitoring section 6 which detected the resource usage statuses of the terminal units A, B and C (resource usage status 10A) informs the resource management section 7 about the resource usage status 10A. The resource management section 7 changes the resource mapping for the terminal units A, B and C in the resource map 8 if necessary referring to the resource map 8 supplied from the resource map database 5 and the resource usage status 10A supplied from the resource monitoring section 6. The resource management section 7 which updated the resource map 8 supplies the updated resource map 8 to the terminal units A, B and C and stores the updated resource map 8 in the resource map database 5.

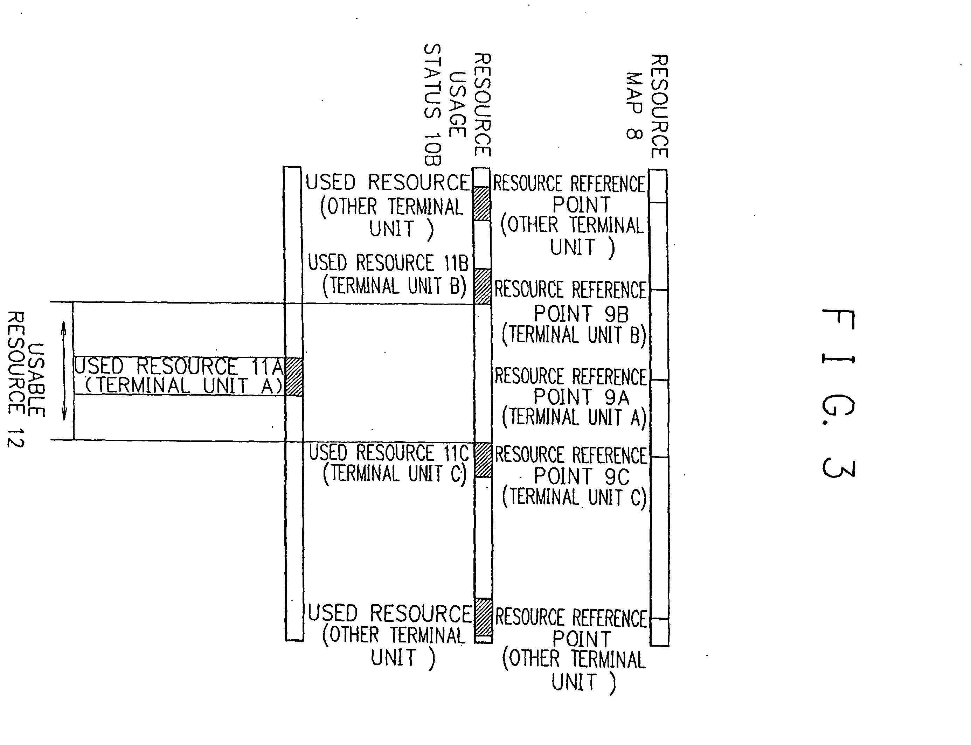

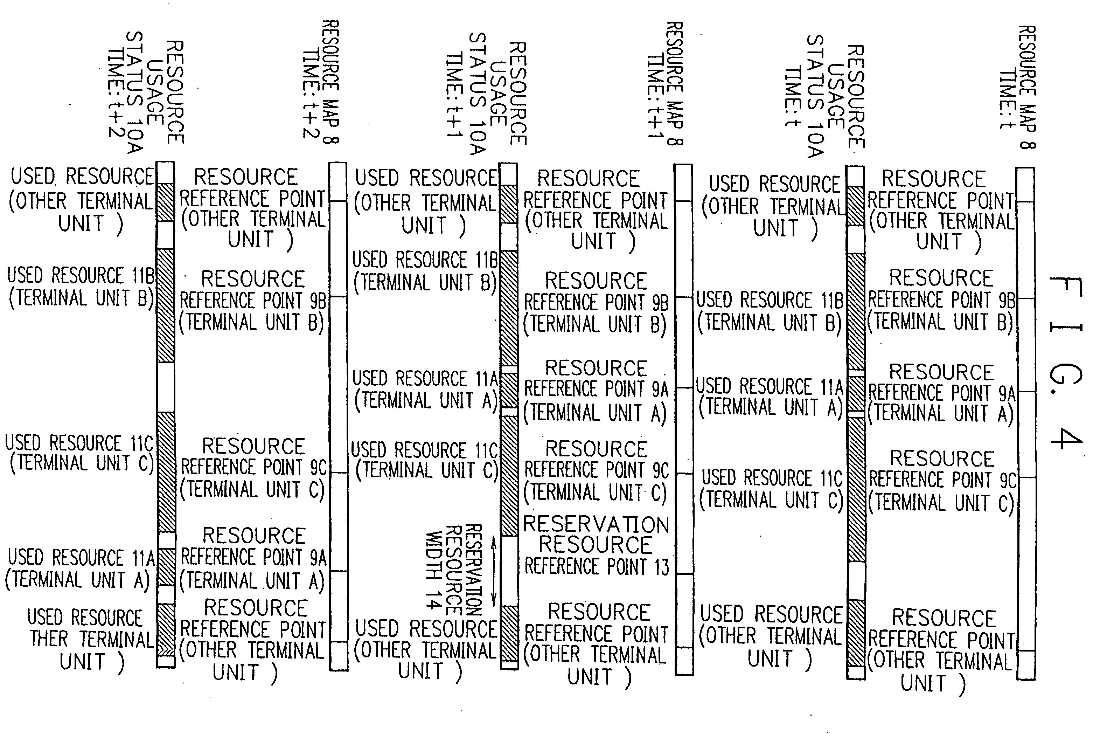

In the following, the operation of the packet transmission system of Fig.2 will be explained referring to Figs.3 and 4. Fig.3 is a schematic diagram showing the operation of the resource acquisition section 4 of each terminal unit for judging and determining a resource that can be used by the terminal unit. Fig.4 is a schematic diagram showing the operation of the resource management section 7 of the resource monitoring device 2 for assigning appropriate resources to the terminal units A, B and C for the effective use of the resources.

First, the operation of the resource acquisition section 4 of each terminal unit (terminal unit A, for example) for determining a usable resource will be explained in detail referring to Fig.3. The resource monitoring device 2 sends the resource map 8 which has been stored in the resource map database 5 to the terminal units A, B and C. In the resource map 8 which is supplied to each terminal unit, the central point of each resource that can be used by each terminal unit is described. The central point of each resource for each terminal unit will hereafter be referred to as "resource reference point". In the example of Fig.3, a resource reference point 9A for the terminal unit A, a resource reference point 9B for the terminal unit B, and a resource reference point 9C for the terminal unit C are described in the resource map 8.

The resource acquisition section 4 of the terminal unit A refers to the resource map 8 supplied from the resource monitoring device 2 and finds that other terminal units that are using "adjacent resources" (that is, resources that are adjacent to the resource used by the terminal unit A) are the terminal units B and C. Since the terminal units B and C are using the "adjacent resources", the resource detection section 3 monitors transmit data that are transmitted by the terminal units B and C and thereby detects resource usage statuses of the terminal units B and C. In the case where the data transmission from each terminal unit to the resource monitoring device 2 is executed by means of CDMA, the resource detection section 3 calculates the correlation between the transmit data and each code pattern for the detection of the resource usage statuses. The resource detection section 3 which detected the resource usage statuses of the terminal units B and C (resource usage status 10B) informs the resource acquisition section 4 about the resource usage status 10B. In the resource usage status 10B shown in Fig.3, a resource which is being used by the terminal unit B ("used resource 11B") and a resource which is being used by the terminal unit C ("used resource 11C") are described. The resource acquisition section 4 of the terminal unit A also manages and supervises a resource which is being used by the terminal unit A as "used resource 11A".

Subsequently, the resource acquisition section 4 of the terminal unit A determines a resource (usable resource 12) that can be used by the terminal unit A. The resource acquisition section 4 first finds idle resources between its own resource and the adjacent resources. In the example of Fig.3, the resource acquisition section 4 finds a left-hand idle resource existing between the "used resource 11A" and the "used resource 11B" and a right-hand idle resource existing between the "used resource 11A" and the "used resource 11C". Subsequently, the resource acquisition section 4 determines a resource that can be used by the terminal unit A (usable resource 12) avoiding resource conflicts with other terminal units, in consideration of the left-hand idle resource and the right-hand idle resource. In the example of Fig.3, the resource acquisition section 4 acquires halves (50%) of the left-hand idle resource and the right-hand idle resource so as to be incorporated in the usable resource 12 of the terminal unit A. Thereafter, the terminal unit A transmits its transmit data (packets) to the resource monitoring device 2 using the usable resource 12.

Next, the operation of the resource management section 7 of the resource monitoring device 2 for assigning appropriate resources to the terminal units A, B and C (terminal unit A, for example) for the effective use of the resources will be explained in detail referring to Fig.4. The resource monitoring section 6 of the resource monitoring device 2 monitors transmit data which are transmitted by the terminal units A, B and C and thereby detects resource usage statuses of the terminal units A, B and C. The resource monitoring section 6 which detected the resource usage statuses of the terminal units A, B and C (resource usage status 10A) informs the resource management section 7 about the resource usage status 10A. If the resource management section 7 (referring to the resource usage status 10A and using a resource insufficiency detection program etc.) judged that the resource 11A which has been assigned to the terminal unit A is insufficient, the resource management section 7 executes resource relocation for the terminal unit A.

Fig.4 shows a case where the resource management section 7 conducts the resource relocation for the terminal unit A in a time interval [t, t+2]. For executing the resource relocation for the terminal unit A, the resource management section 7 first sets a "reservation resource reference point 13" in an appropriate idle zone of the resource map 8 in which the relocated resource should be placed, and includes the reservation resource reference point 13 in a new resource map 8 which will be supplied to the terminal units (as shown in the resource map 8 of Fig.4 at time t+1). The new resource map 8 including the reservation resource reference point 13 is supplied to the terminal units A, B, C, etc., and thereby the terminal unit B and another terminal unit which are using resources adjacent to the reservation resource reference point 13 are controlled to make room for a predetermined "reservation resource width 14" around the reservation resource reference point 13. In short, the reservation resource width 14 needed by the terminal unit A is secured by forcibly reducing resource widths of terminal units that are using resources adjacent to the reservation resource reference point 13. After the reservation resource width 14 for the terminal unit A has been secured, the resource relocation for the terminal unit A is executed (as shown in the resource map 8 of Fig.4 at time t+2).

Incidentally, the resource assignment process which has been explained above is employed by the resource management section 7 also when another terminal unit is newly connected to the resource monitoring device 2.

While the resource acquisition section 4 of the terminal unit A in the above explanation acquired 50% of the left-hand idle resource and the right-hand idle resource so as to be incorporated in the usable resource 12, it is also possible to vary the percentage or priority among terminal units in consideration of conditions such as packet supporting/non-supporting, maximum data transmission rate, etc. In a terminal unit that does not support packet transmission, rapid increase of the resource width does not occur, and thus the resource acquisition section 4 can acquire the whole (100%) of the idle resources for the usable resource 12. It is also possible to give higher priority to terminal units that are required high-speed data transmission and set a higher percentage for such high-speed terminal units.

As described above, in the packet transmission system and the packet transmission method in accordance with the embodiment of the present invention, each terminal unit that is going to transmit packets can autonomously change its resource width depending on the amount of upstream data to be transmitted, by use of the resource map 8 which is supplied from the resource monitoring device 2. Therefore, the number of messages that have to be communicated between the terminal unit and the resource monitoring device 2 for the resource assignment (resource width alternation) can be reduced, thereby the delay time concerning the resource assignment can be reduced, and thereby the data transmission throughput can be increased. Basically, the resource monitoring device 2 does not have to manage and control the resources which are used by each of the terminal units, therefore, the load on the resource monitoring device 2 for the resource assignment can be reduced in comparison with the case of the conventional packet transmission system.

The resource monitoring device 2 in the above embodiment is also provided with a function for executing the resource relocation for a terminal unit whose resource is insufficient by setting the reservation resource reference point 13 in an appropriate idle zone of the resource map 8. The new resource map 8 including the reservation resource reference point 13 is supplied to the terminal units, and thereby the reservation resource width 14 needed by the terminal unit whose resource is insufficient is secured around the reservation resource reference point 13. Therefore, the resources can be assigned and distributed to the terminal units appropriately and the effective use of the resources is realized.

Incidentally, the operation of the terminal unit (A, B, C) or the resource monitoring device 2 in the packet transmission system which has been described above can be implemented by specially-designed hardware operated by specific software, however, it can also be implemented by use of a general-purpose computer and a machine-readable record medium (floppy disk, CD-ROM, DVD-ROM, HDD, optical disk, etc.) storing one or more programs for instructing the computer to execute the packet transmission method described above. The programs stored in the machine-readable record medium are read out by the computer and thereby the computer operates as the terminal unit (A, B, C) or the resource monitoring device 2 of the above embodiment.

The communication method employed for the data communication between the resource monitoring device 2 and the terminal units (A, B, C) is not limited to CDMA, and thus the present invention can be applied to various packet transmission systems using various resources (code patterns, time slots, frequency bands, etc.).

While the present invention has been described with reference to the particular illustrative embodiments, it is not to be restricted by those embodiments but only by the appended claims. It is to be appreciated that those skilled in the art can change or modify the embodiments without departing from the scope of the apended claims.

## Claims

1. A packet transmission system in which each terminal unit (A, B, C) transmits data to a resource monitoring device (2) of a network (1) for sending the data to another terminal unit via the network (1), wherein:
the resource monitoring device (2) includes:
a resource map database (5) for storing a resource map (8) in which reference points of resources that can be used by the terminal units (A, B, C) are described; and
a resource management means (7) for obtaining the resource map (8) from the resource map database (5) and transmitting the resource map (8) to the terminal units (A, B, C), and
each terminal unit (A, B, C) includes:
a resource detection means (3) for detecting resource usage statuses (10B) of terminal units that are using resources adjacent to a resource used by the terminal unit (A, B, C) to which the resource detection means (3) belongs by use of the resource map (8) supplied from the resource monitoring device (2); and
a resource acquisition means (4) for finding idle resources between the resource used by the terminal unit (A, B, C) and the adjacent resources based on the resource usage statuses (10B) detected by the resource detection means (3) and acquiring all or part of the idle resources so as to be incorporated in the usable resource (12) of the terminal unit (A, B, C).

2. A packet transmission system as claimed in claim 1, wherein:
the resource monitoring device (2) further includes a resource monitoring means (6) for monitoring resource usage statuses (10A) of the terminal units (A, B, C) by monitoring packet traffic from the terminal units (A, B, C), and
the resource management means (7) includes a resource map update means (7) for receiving the resource usage statuses (10A) of the terminal units (A, B, C) from the resource monitoring means (6), finding a terminal unit whose resource is insufficient by use of the resource usage statuses (10A), and updating the resource map (8) by setting a reservation resource reference point (13) in an appropriate idle zone of the resource map (8) so as to be used as the reference point of a usable resource (12) which is newly assigned to the terminal unit whose resource is insufficient, and
the resource acquisition means (4) of terminal units that are using resources adjacent to the reservation resource reference point (13) in the updated resource map (8) reduce their resources so that an idle resource zone (14) will be prepared around the reservation resource reference point (13), and
the resource acquisition means (4) of the terminal unit whose resource is insufficient sets a new resource for the terminal unit in the idle resource zone (14).

3. A packet transmission system as claimed in claim 1, wherein the terminal units (A, B, C) are adapted to transmit data to the resource monitoring device (2) by means of CDMA.

4. A packet transmission system as claimed in claim 1, wherein the resource acquisition means (4) are adapted to acquire approximately 50% of the idle resources so as to be incorporated in the usable resource (12) of the terminal unit (A, B, C).

5. A packet transmission method for a packet transmission system in which each terminal unit (A, B, C) transmits data to a resource monitoring device (2) of a network (1) for sending the data to another terminal unit via the network (1), comprising the steps of:
a resource map reception step in which each terminal unit (A, B, C) receives a resource map (8) in which reference points of resources that can be used by the terminal units (A, B, C) are described from the resource monitoring device (2);
an adjacent resource usage status detection step in which the terminal unit (A, B, C) detects resource usage statuses (10B) of terminal units that are using resources adjacent to a resource used by the terminal unit (A, B, C) by use of the resource map (8) supplied from the resource monitoring device (2); and
a resource acquisition step in which the terminal unit (A, B, C) finds idle resources between the resource used by the terminal unit (A, B, C) and the adjacent resources based on the resource usage statuses (10B) detected in the adjacent resource usage status detection step and acquires all or part of the idle resources so as to be incorporated in the usable resource (12) of the terminal unit (A, B, C).

6. A packet transmission method as claimed in claim 5, further comprising:
a resource usage status monitoring step in which the resource monitoring device (2) monitors resource usage statuses (10A) of the terminal units (A, B, C) by monitoring packet traffic from the terminal units (A, B, C);
a resource map update step in which the resource monitoring device (2) finds a terminal unit whose resource is insufficient by use of the resource usage statuses (10A) and updates the resource map (8) by setting a reservation resource reference point (13) in an appropriate idle zone of the resource map (8) so as to be used as the reference point of a usable resource (12) which is newly assigned to the terminal unit whose resource is insufficient;
a resource reduction step in which terminal units that are using resources adjacent to the reservation resource reference point (13) in the updated resource map (8) reduce their resources so that an idle resource zone (14) will be prepared around the reservation resource reference point (13); and
a resource setting step in which the terminal unit whose resource is insufficient sets its new resource in the idle resource zone (14) prepared in the resource reduction step.

7. A packet transmission method as claimed in claim 5, wherein the data transmission from the terminal units (A, B, C) to the resource monitoring device (2) is executed by means of CDMA (Code Division Multiple Access).

8. A packet transmission method as claimed in claim 5, wherein in the resource acquisition step, the terminal unit (A, B, C) acquires approximately 50% of the idle resources so as to be incorporated in the usable resource (12) of the terminal unit (A, B, C).

9. A machine-readable record medium storing one or more programs for instructing one or more computers to execute a packet transmission method for a packet transmission system in which each terminal unit (A, B, C) transmits data to a resource monitoring device (2) of a network (1) for sending the data to another terminal unit via the network (1), wherein the packet transmission method comprises the steps of:
a resource map reception step in which each terminal unit (A, B, C) receives a resource map (8) in which reference points of resources that can be used by the terminal units (A, B, C) are described from the resource monitoring device (2);
an adjacent resource usage status detection step in which the terminal unit (A, B, C) detects resource usage statuses (10B) of terminal units that are using resources adjacent to a resource used by the terminal unit (A, B, C) by use of the resource map (8) supplied from the resource monitoring device (2); and
a resource acquisition step in which the terminal unit (A, B, C) finds idle resources between the resource used by the terminal unit (A, B, C) and the adjacent resources based on the resource usage statuses (10B) detected in the adjacent resource usage status detection step and acquires all or part of the idle resources so as to be incorporated in the usable resource (12) of the terminal unit (A, B, C).

10. A machine-readable record medium as claimed in claim 9, wherein the packet transmission method implemented by the computers and the programs further comprises:
a resource usage status monitoring step in which the resource monitoring device (2) monitors resource usage statuses (10A) of the terminal units (A, B, C) by monitoring packet traffic from the terminal units (A, B, C);
a resource map update step in which the resource monitoring device (2) finds a terminal unit whose resource is insufficient by use of the resource usage statuses (10A) and updates the resource map (8) by setting a reservation resource reference point (13) in an appropriate idle zone of the resource map (8) so as to be used as the reference point of a usable resource (12) which is newly assigned to the terminal unit whose resource is insufficient;
a resource reduction step in which terminal units that are using resources adjacent to the reservation resource reference point (13) in the updated resource map (8) reduce their resources so that an idle resource zone (14) will be prepared around the reservation resource reference point (13); and
a resource setting step in which the terminal unit whose resource is insufficient sets its new resource in the idle resource zone (14) prepared in the resource reduction step.

11. A machine-readable record medium as claimed in claim 9, wherein the data transmission from the terminal units (A, B, C) to the resource monitoring device (2) is executed by means of CDMA.

12. A machine-readable record medium as claimed in claim 9, wherein in the resource acquisition step, the terminal unit (A, B, C) acquires approximately 50% of the idle resources so as to be incorporated in the usable resource (12) of the terminal unit (A, B, C).

## Patentansprüche

1. Paketübertragungssystem, bei dem jede Terminaleinheit (A, B, C) Daten an eine Resourcenüberwachungsvorrichutng (2) eines Netzwerkes überträgt zum Senden der Daten an eine andere Terminaleinheit über das Netzwerk (1), wobei
die Resourcenüberwachungsvorrichtung aufweist:
eine Resourcenplandatenbank (5) zum Speichern eines Resourcenplans (8), in der Bezugspunkte von Resourcen, die durch die Tenninaleinheiten (A, B, C) verwendet werden können, beschrieben sind, und
ein Resourcenverwaltungsmittel (7) zum Erhalten des Resourcenplans (8) aus der Resourcenplandatenbank (5) und zum Übertragen des Resourcenplans (8) an die Terminaleinheiten (A, B, C), und
wobei je Terminaleinheit (A, B, C) aufweist:
ein Resourcenerfassungmittel (3) zur Erfassung von Resourcenbenutzungszuständen (10B) von Anschlusseinheiten, die Resourcen verwenden, die angrenzend an die von der Anschlusseinheit (A, B, C) verwendeten Resource liegen, zu der das Resourcenerfassungmittel (3) gehört, durch Verwendung des Resourcenplans (8), der von der Resourcenüberwachungsvorrichtung (2) geliefert wurde, und
ein Resourcenaneignungsmittel (4) zum Finden ungenutzter Resourcen unter den Resourcen, die von der Terminaleinheit (A, B, C) verwendet wird, und angrenzenden Resourcen, basierend auf den Resourcenbenutzungszuständen (10B), die durch das Resourcenerfassungsmittel (3) erfasst wurden, und zum Aneignen eines Teils oder aller unbenutzter Resourcen, um sie in die verwendbare Resource (12) der Terminaleinheit (A, B, C) einzubringen.

2. Paketübertragungssystem nach Anspruch 1, wobei:
die Resourcenüberwachungsvorrichtung (2) ferner ein Resourcenüberwachungsmittel (6) aufweist zum Überwachen von Resourcenbenutzungszuständen (10A) der Terminaleinheiten (A, B, C) durch Überwachen des Paketverkehrs der Terminaleinheiten (A, B, C), und
wobei das Resourcenverwaltungsmittel (7) ein Resourcenplanaktualisierungsmittel (7) aufweist zum Empfangen der Resourcenbenutzungszustände (10A) der Terminaleinheiten (A, B, C) von dem Resourcenüberwachungsmittel (6), zum Finden einer Terminaleinheit, deren Resource unzureichend ist, durch Verwendung der Resourcenbenutzungszustände (10A) und zum Aktualisieren des Resourcenplans (8) durch Einstellen eines Reservierungsresourcen-Referenzpunktes (13) in einer angemessenen unbenutzten Zone des Resourcenplans (8), um als Bezugspunkt einer verwendbaren Resource (12) verwendet zu werden, der der Terminaleinheit, deren Resource unzureichend ist, neu zugewiesen wird, und
wobei das Resourcenaneignungsmittel (4) der Anschlusseinheiten, die an den Reservierungsresourcenbezugspunkt in dem aktualisierten Resourcenplan (8) angrenzende Resourcen nutzen, ihre Resourcen vermindern, so dass eine ungenutzte Resourcenzone (14) um den Reservierungsresourcenbezugspunkt (13) vorbereitet wird, und
wobei das Resourcenaneignungsmittel (4) der Terminaleinheit, deren Resource unzureichend ist, eine neue Resource für die Terminaleinheit in der ungenutzten Resourcenzone (14) einstellt.

3. Paketübertragungssystem nach Anspruch 1, wobei die Terminaleinheiten (A, B, C) ausgebildet sind, Daten an die Resourcenüberwachungsvorrichtung (2) mittels CDMA zu übertragen.

4. Paketübertragungssystem nach Anspruch 1, wobei die Resourcenaneignungsmittel ausgebildet sind, um sich etwa 50 % der ungenutzten Resourcen anzueignen, um sie in die verwendbare Resource (12) der Terminaleinheit (A, B, C) einzubringen.

5. Paketübertragungsverfahren für ein Paketübertragungssystem, bei dem jede Anschlusseinheit (A, B, C) Daten an eine Resourcenüberwachungsvorrichtung (2) eines Netzwerkes (1) überträgt zum Senden der Daten an eine andere Terminaleinheit über das Netzwerk (1) mit den Schritten:
einem Resourcenplanempfangsschritt, bei dem jede Terminaleinheit (A, B, C) einen Resourcenplan (8) empfängt, in dem Bezugspunkte von Resourcen, die durch die Terminaleinheiten (A, B, C) verwendet werden können, beschrieben sind, von der Resourcenüberwachungsvorrichtung (2) einem Erfassungsschritt für den Benutzungsstatus angrenzender Resourcen, bei dem die Anschlusseinheit (A, B, C) Resourcennutzungszustände (10B) von Terminaleinheiten erfasst, die angrenzend einer von der Terminaleinheit (A, B, C) genutzten Resource liegende Resourcen nutzen, durch Verwendung des Resourcenplans (8), der von der Resourcenüberwachungsvorrichtung (2) zugeführt wird, und
einem Resourcenaneignungsschritt, bei dem die Anschlusseinheit (A, B, C) ungenutzte Resourcen unter den Resourcen, die von der Terminaleinheit (A, B, C) genutzt wird, und angrenzenden Resourcen findet, basierend auf den Resourcennutzungszuständen (10B), die in dem Angrenzresourcen-Nutzungsstatuserfassungsschritt erfasst wurden und sich einen Teil oder alle ungenutzten Resourcen aneignet, um sie den verwendbaren Resourcen (12) der Terminaleinheit (A, B, C) zuzufügen.

6. Paketübertragungsverfahren nach Anspruch 5 mit ferner:
einem Resourcennutzungsstatusüberwachungsschritt, in welchem die Resourcenüberwachungsvorrichtung (2) Resourcennutzungszustände (10A) der Terminaleinheiten (A, B, C) durch Überwachung von Paketverkehr von den Terminaleinheiten (A, B, C) überwacht,
einem Resourcenplanaktualisierungsschritt, in dem die Resourcenüberwachungsvorrichtung (2) eine Anschlusseinheit findet, deren Resource unzureichend ist, durch Nutzung der Resourcenbenutzungszustände (10A) und den Resourcenplan (8) aktualisiert durch Einstellen eines Reservierungsresourcenbezugspunktes (13) in einer geeigneten ungenutzten Zone des Resourcenplans (8), um als Bezugspunkt einer verwendbaren Resource (12) zu dienen, die der Terminaleinheit neu zugewiesen wird, deren Resource unzureichend ist,
einem Resourcenverminderungsschritt, in dem Anschlusseinheiten, die an den Reservierungsresourcenbezugspunkt (13) in dem aktualisierten Resourcenplan (8) angrenzende Resourcen nutzen, ihre Resourcen reduzieren, so dass eine ungenutzte Resourcenzone (14) um den Reservierungsresourcenbezugspunkt (13) vorbereitet wird, und
einem Resourceneinstellschritt, in dem die Terminaleinheit, deren Resource unzureichend ist, ihre neue Resource in der ungenutzten Resourcenzone (14), die in dem Resourcenreduktionsschritt vorbereitet wurde, einstellt.

7. Paketübertragungsverfahren nach Anspruch 5, wobei die Datenübertragung von den Terminaleinheiten (A, B, C) zu der Resourcenüberwachungsvorrichtung (2) mittels CDMA (Code Division Multiple Access) durchgeführt wird.

8. Paketübertragungsverfahren nach Anspruch 5, wobei in dem Resourcenaneignungsschritt die Terminaleinheit (A, B, C) etwa 50 % der ungenutzten Resourcen sich aneignet, um sie in die verwendbare Resource (12) der Terminaleinheit (A, B, C) einzufügen.

9. Maschinenlesbares Aufzeichnungsmedium, das ein oder mehrere Programme zum Anweisen eines oder mehrerer Computer zur Durchführung eines Übertragungsverfahrens für ein Paketübertragungssystem speichert, bei dem jede Terminaleinheit (A, B, C) Daten an eine Resourcenüberwachungsvorrichtung (2) eines Netzwerkes (1) überträgt zum Senden der Daten an eine weitere Terminaleinheit über das Netzwerk (1), wobei das Paketübertragungsverfahren die Schritte aufweist:
einen Resourcenplanempfangsschritt, in dem jede Terminaleinheit (A, B, C) einen Resourcenplan (8) von der Resourcenüberwachungsvorrichtung (2) empfangt, in dem Bezugspunkte von Resourcen, die durch die Terminaleinheiten (A, B, C) genutzt werden können, beschrieben sind,
einen Angrenzresourcennutzungsstatuserfassungsschritt, in dem die Terminaleinheit (A, B, C) Resourcennutzungszustände (10B) von Terminaleinheiten erfasst, die Resourcen angrenzend an die Resourcen, die von der Terminaleinheit (A, B, C) genutzt werden, verwenden, durch Nutzung des Resourcenplans (8), der von der Resourcenüberwachungsvorrichtung (2) zugeführt wurde, und
einen Resourcenaneignungsschritt, in dem die Tenninaleinheit (A, B, C) ungenutzte Resource unter den Resourcen, die von der Terminaleinheit (A, B, C) genutzt werden, und den angrenzenden Resourcen findet, basierend auf den Resourcennutzungszuständen (10B), die in dem Angrenzresourcennutzungsstatuserfassungsschritt erfasst wurden, und
zur Aneignung eines Teils oder aller ungenutzter Resourcen, um sie der verwendbaren Resource (12) der Terminaleinheit (A, B, C) zuzufügen.

10. Maschinenlesbares Aufzeichnungsmedium nach Anspruch 9, wobei das Paketübertragungsverfahren, das durch die Computer und Programme implementiert wird, ferner aufweist:
einen Resourcennutzungsstatusüberwachungsschritt, in dem die Resourcenüberwachungsvorrichtung (2) Resourcenbenutzungszustände (10A) der Terminaleinheiten (A, B, C) durch Überwachung von Paketverkehr von den Terminaleinheiten (A, B, C) überwacht,
einen Resourcenplanaktualisierungsschritt, in dem die Resourcenüberwachungsvorrichtung (2) eine Terminaleinheit findet, deren Resource unzureichend ist, durch Nutzung der Resourcenbenutzungszustände (10A) und den Resourcenplan (8) aktualisiert durch Einstellen eines Reservierungsresourcenbezugspunktes (13) in einer geeigneten ungenutzten Zone des Resourcenplans (8), der als Bezugspunkt einer verwendbaren Resource (12) dient, die neu der Anschlusseinheit, deren Resource unzureichend ist, zugewiesen wird,
einen Resourchenverminderungsschritt, in dem die Terminaleinheiten, die angrenzende Resourcen an den Reservierungsresourcenbezugspunkt (13) in dem aktualisierten Resourcenplan (8) nutzen, ihre Resourcen reduzieren, so dass eine ungenutzte Resourcenzone (14) um den Reservierungsresourcenbezugspunkt (13) vorbereitet wird, und
einen Resourceneinstellschritt, in dem die Terminaleinheit, deren Resource unzureichend ist, ihre neue Resource in der ungenutzten Resourcenzone (14), die in dem Resourcenreduktionsschritt vorbereitet wurde, einstellt.

11. Maschinenlesbares Aufzeichnungsmedium nach Anspruch 9, wobei die Datenübertragung von den Anschlusseinheiten (A, B, C) an die Resourcenüberwachungsvorrichtung (2) mittels CDMA durchgeführt wird.

12. Maschinenlesbares Aufzeichnungsmedium nach Anspruch 9, wobei in dem Resourcenaneignungsschritt sich die Terminaleinheit (A, B, C) etwa 50 % der ungenutzten Resourcen aneignet, um sie der verwendbaren Resource (12) der Terminaleinheit (A, B, C) zuzufügen.

## Revendications

1. Système de transmission de paquets dans lequel chaque station terminale (A, B, C) transmet des données à un dispositif de surveillance des ressources (2) d'un réseau (1) pour envoyer les données à une autre station terminale via le réseau (1), dans lequel :
le dispositif de surveillance des ressources (2) comprend :
une base de données de mappe des ressources (5) pour stocker une mappe des ressources (8) dans laquelle les points de référence des ressources qui peuvent être utilisés pour les stations terminales (A, B, C) sont décrits ; et
un moyen de gestion des ressources (7) pour obtenir la mappe des ressources (8) à partir de la base de données de mappe des ressources (5) et transmettre la mappe des ressources (8) aux stations terminales (A, B, C) et
chaque station terminale (A, B, C) comprend :
un moyen de détection des ressources (3) pour détecter les états d'utilisation des ressources (10B) de stations terminales qui utilisent les ressources adjacentes à une ressource utilisée par la station terminale (A, B, C) à laquelle le moyen de détection des ressources (3) appartient par l'utilisation de la mappe des ressources (8) fournie par le dispositif de surveillance des ressources (2) ; et
un moyen d'acquisition des ressources (4) pour trouver les ressources inactives entre les ressources utilisées par la station terminale (A, B, C) et les ressources adjacentes sur la base des états d'utilisation des ressources (10B) détectées par le moyen de détection des ressources (3) et pour acquérir tout ou partie des ressources inactives de manière à les incorporer aux ressources utilisables (12) de la station terminale (A, B, C).

2. Système de transmission de paquets selon la revendication 1, dans lequel :
le dispositif de surveillance des ressources (2) comprend en outre un moyen de surveillance des ressources (6) pour surveiller les états d'utilisation des ressources (10A) des stations terminales (A, B, C) en surveillant le trafic des paquets partant des stations terminales (A, B, C) et
le moyen de gestion des ressources (7) comprend un moyen de mise à jour de la mappe des ressources (7) pour recevoir les états d'utilisation des ressources (10A) des stations terminales (A, B, C) en provenance du moyen de surveillance des ressources (6), pour trouver une station terminale dont les ressources sont insuffisantes au moyen des états d'utilisation des ressources (10A) et pour mettre à jour la mappe des ressources (8) en établissant un point de référence des ressources de réservation (13) dans une zone inactive appropriée de la mappe des ressources (8) de manière à l'utiliser comme point de référence des ressources utilisables (12) qui sont nouvellement affectées à la station terminale dont les ressources sont insuffisantes et
le moyen d'acquisition des ressources (4) des stations terminales qui utilise des ressources adjacentes au point de référence des ressources de réservation (13) dans la mappe des ressources mises à jour (8) réduit leurs ressources de sorte qu'une zone de ressources inactives (14) sera préparée autour du point de référence des ressources de réservation (13) et
le moyen d'acquisition des ressources (4) de la station terminale dont les ressources sont insuffisantes établit de nouvelles ressources pour la station terminale dans la zone de ressources inactives (14).

3. Système de transmission de paquets selon la revendication 1, dans lequel les stations terminales (A, B, C) sont adaptées pour transmettre des données au dispositif de surveillance des ressources (2) au moyen d'un CDMA.

4. Système de transmission de paquets selon la revendication 1, dans lequel le moyen d'acquisition des ressources (4) est adapté pour acquérir approximativement 50 % des ressources inactives de sorte qu'elles soient incorporées dans les ressources utilisables (12) de la station terminale (A, B, C).

5. Méthode de transmission de paquets pour un système de transmission de paquets dans lequel chaque station terminale (A, B, C) transmet les données à un dispositif de surveillance des ressources (2) d'un réseau (1) pour envoyer les données à une autre station terminale via le réseau (1), comprenant les étapes suivantes :
une étape de réception de la mappe des ressources dans laquelle chaque station terminale (A, B, C) reçoit une mappe des ressources (8) dans laquelle les points de référence des ressources qui peuvent être utilisés par les stations terminales (A, B, C) sont décrits par le dispositif de surveillance des ressources (2) ;
une étape de détection de l'état d'utilisation des ressources adjacentes dans laquelle la station terminale (A, B, C) détecte les états d'utilisation des ressources (10B) des stations terminales qui utilisent des ressources adjacentes aux ressources utilisées par la station terminale (A, B, C) en utilisant la mappe des ressources (8) fournie par le dispositif de surveillance des ressources (2) ; et
une étape d'acquisition des ressources dans laquelle la station terminale (A, B, C) trouve les ressources inactives entre les ressources utilisées par la station terminale (A, B, C) et les ressources adjacentes sur la base des états d'utilisation des ressources (10B) détectées à l'étape de détection de l'état d'utilisation des ressources adjacentes et acquiert tout ou partie des ressources inactives de manière à les incorporer aux ressources utilisables (12) de la station terminale (A, B, C).

6. Méthode de transmission de paquets selon la revendication 5, comprenant en outre :
une étape de surveillance de l'état d'utilisation des ressources dans laquelle le dispositif de surveillance des ressources (2) surveille les états d'utilisation des ressources (10A) des stations terminales (A, B, C) en surveillant le trafic des paquets à partir des stations terminales (A, B, C) ;
une étape de mise à jour de la mappe des ressources dans laquelle le dispositif de surveillance des ressources (2) trouve une station terminale dont les ressources sont insuffisantes en utilisant les états d'utilisation des ressources (10A) et met à jour la mappe des ressources (8) en établissant un point de référence des ressources de réservation (13) dans une zone inactive appropriée de la mappe des ressources (8) de manière à les utiliser comme point de référence des ressources utilisables (12) qui sont nouvellement affectées à la station terminale dont les ressources sont insuffisantes ;
une étape de réduction des ressources dans laquelle les stations terminales qui utilisent les ressources adjacentes au point de référence des ressources de réservation (13) dans la mappe des ressources mises à jour (8) réduisent leurs ressources de sorte qu'une zone de ressources inactives (14) sera préparée autour du point de référence des ressources de réservation (13) ; et
une étape d'établissement des ressources dans laquelle la station terminale dont les ressources sont insuffisantes établit ses nouvelles ressources dans la zone de ressources inactives (14) préparée à l'étape de réduction des ressources.

7. Méthode de transmission de paquets selon la revendication 5, dans laquelle la transmission de données des stations terminales (A, B, C) au dispositif de surveillance des ressources (2) est exécutée au moyen d'un CDMA (Accès multiple par répartition en code).

8. Méthode de transmission de paquets selon la revendication 5, dans laquelle, à l'étape d'acquisition des ressources, la station terminale (A, B, C) acquiert approximativement 50 % des ressources inactives de manière à les incorporer aux ressources utilisables (12) de la station terminale (A, B, C).

9. Support d'enregistrement exploitable par une machine stockant un ou plusieurs programmes pour donner l'ordre à un ou plusieurs ordinateurs d'exécuter une méthode de transmission de paquets pour un système de transmission de paquets dans lequel chaque station terminale (A, B, C) transmet des données à un dispositif de surveillance des ressources (2) d'un réseau (1) pour envoyer les données à une autre station terminale via le réseau (1), où la méthode de transmission de paquets comprend les étapes suivantes :
une étape de réception de la mappe des ressources dans laquelle chaque station terminale (A, B, C) reçoit une mappe des ressources (8) dans laquelle les points de référence des ressources qui peuvent être utilisés par les stations terminales (A, B, C) sont décrits par le dispositif de surveillance des ressources (2) ;
une étape de détection de l'état d'utilisation des ressources adjacentes dans laquelle la station terminale (A, B, C) détecte des états d'utilisation des ressources (10B) des stations terminales qui utilisent des ressources adjacentes aux ressources utilisées par la station terminale (A, B, C) au moyen de la mappe des ressources (8) fournie par le dispositif de surveillance des ressources (2) ; et
une étape d'acquisition des ressources dans laquelle la station terminale (A, B, C) trouve les ressources inactives entre les ressources utilisées par la station terminale (A, B, C) et les ressources adjacentes sur la base des états d'utilisation des ressources (10B) détectées à l'étape de détection de l'état d'utilisation des ressources adjacentes et acquiert toutes ou partie des ressources inactives de manière à les incorporer aux ressources utilisables (12) de la station terminale (A, B, C).

10. Support d'enregistrement exploitable par une machine selon la revendication 9, dans lequel la méthode de transmission de paquets mise en oeuvre par les ordinateurs et les programmes comprend en outre :
une étape de surveillance de l'état d'utilisation des ressources dans laquelle le dispositif de surveillance des ressources (2) surveille les états d'utilisation des ressources (10A) des stations terminales (A, B, C) en surveillant le trafic de paquet en provenance des stations terminales (A, B, C) ;
une étape de mise à jour de la mappe des ressources dans laquelle le dispositif de surveillance des ressources (2) trouve une station terminale dont les ressources sont insuffisantes en utilisant les états d'utilisation des ressources (10A) et met à jour la mappe des ressources (8) en établissant un point de référence des ressources de réservation (13) dans une zone inactive appropriée de la mappe des ressources (8) de sorte qu'elles soient utilisées comme point de référence des ressources utilisables (12) qui sont nouvellement affectées à la station terminale dont les ressources sont insuffisantes ;
une étape de réduction des ressources dans laquelle les stations terminales qui utilisent des ressources adjacentes au point de référence des ressources de réservation (13) dans la mappe des ressources mises à jour (8) réduisent leurs ressources de sorte qu'une zone de ressources inactives (14) sera préparée autour du point de référence des ressources de réservation (13) ; et
une étape d'établissement des ressources dans laquelle la station terminale dont les ressources sont insuffisantes établit ses nouvelles ressources dans la zone de ressources inactives (14) préparée à l'étape de réduction des ressources.

11. Support d'enregistrement exploitable par une machine selon la revendication 9, dans lequel la transmission des données des stations terminales (A, B, C) au dispositif de surveillance des ressources (2) est exécutée au moyen d'un CDMA.

12. Support d'enregistrement exploitable par une machine selon la revendication 9, dans lequel, à l'étape d'acquisition des ressources, la station terminale (A, B, C) acquiert approximativement 50 % des ressources inactives de manière à les incorporer aux ressources utilisables (12) de la station terminale (A, B, C).
